# EUROPEAN PATENT SPECIFICATION

(11) **EP 2 052 625 B1**
(45) Date of publication and mention of the grant of the patent: **13.12.2017**
(21) Application number: 07119095.3
(22) Date of filing: 23.10.2007
(51) Int. Cl.: A23C 19/06, A23C 19/068, A23C 19/082, A23C 19/09

(54) **Semi-hard cheese with Mozzarella-like textural properties, and its preparation**
Halbharter Käse mit mozarellaähnlichen Textureigenschaften und seine Herstellung
Fromage semi dur avec des propriétés de texture de type Mozzarella, et sa préparation

(43) Date of publication of application: 29.04.2009
(73) Proprietor: FrieslandCampina Nederland B.V., 3818 LE Amersfoort (NL)
(72) Inventor: Penders, Johannes Antonius, 5324 AV, Ammerzoden (NL); van Haren, Anna Maria Catharina, 5211PS Den Bosch (NL)
(74) Representative: Nederlandsch Octrooibureau

(56) References cited:
- EP-A- 0 403 137
- EP-A- 0 535 728
- EP-A- 0 815 736
- US-A- 4 680 181
- US-A1- 2002 122 845
- US-A1- 2005 271 789
- DATABASE WPI Week 199443 Derwent Publications Ltd., London, GB; AN 1992-287083 XP002463645 & JP 06 087736 B (SNOW BRAND MILK PROD CO LTD) 9 November 1994 (1994-11-09) & JP 04 190740 A (SNOW BRAND MILK PROD CO LTD) 9 July 1992 (1992-07-09)

## Description

### FIELD OF THE INVENTION

The present invention relates to a cheese of the semi-hard type, such as Gouda, Maasdam, Edam and the like, having improved textural properties, and the preparation thereof. The invention is particularly directed to low-fat semi-hard cheese.

### BACKGROUND OF THE INVENTION

It is a subject of the invention to provide a semi-hard cheese having improved textural properties, especially in terms of stringiness. Such a cheese may find use in all kinds of food applications. However, the prior art is silent on semi-hard cheese with its characteristic flavor but with textural properties which resemble those of a Mozzarella.

Instead, success has been reported in the field of Cheddar, which is a hard cheese with an average moisture content of about 39 %. For instance, US 2002/0122845 discloses a cheese that has the stringy texture and melt characteristics of young Mozzarella cheese, but the visual appearance of cheddar cheese. The reason for the refinement is sought in the non-optimal melt characteristics of American style cheeses. In an exemplified embodiment, this is accomplished by adding a natural and gold colorant and a quantity of 5 - 10 wt% of shredded or fined Cheddar to milk in the vat at the start of the process for manufacturing Mozzarella cheese. Adding the American style cheese at the upstream end of the Mozzarella making process maximizes its ability to impart its color and flavor to the milk and curds in the vat. The remainder of the Mozzarella making is substantially unaffected. The finished cheese possesses all the usual characteristics of natural Mozzarella, including its fat and moisture content. An alternative is to add the shredded American style cheese downstream of the Mozzarella curd in an enclosed finishing vat, optionally together with starter distillate.

Cheddar and Gouda, Edam or Maasdam cheese manufacture vary in many aspects from one another. While Cheddar manufacture uses rennet and curd processing involves "cheddaring", milling, dry salting and ripening at 7 °C, a semi-hard cheese of the invention is prepared by curd washing, pressing, brining and ripening at higher temperatures, 13 - 19 °C. Each of these steps are delicate processing steps that are essential for maturation of the cheese, and all differ. Not unimportantly, and quite related with its manufacturing methods, Cheddar is also differently appreciated. For instance, there is no agreement at all among various investigators regarding the characteristic flavor of Cheddar. Some characterize Cheddar as exhibiting "sulfur, brothy and nutty flavors" (see e.g. M.A.S. Drake "Development of a descriptive sensory language for Cheddar cheese" J. Food Science 66: 1422-1427 (2001), while the aforementioned Gouda, Edam and Maasdam are characterized by their typical predominant smooth texture and mild, aromatic, buttery flavor. Besides mesophilic cultures, thermophilic starter cultures may play an important role therein.

In view thereof, it is not considered a straightforward choice for a skilled person to substitute Cheddar for a semi-hard cheese such as Gouda, Edam or Maasdam in the Mozzarella manufacture according to US 2002/0122845, especially since the Mozzarella manufacturing method taught therein lacks any measures to control and protect the flavor profile of the ripened cheese mixed in with the Mozzarella curds before cooking.

Hence, not surprisingly, it was found by the inventors that mere substitution of Cheddar for a semi-hard cheese according to the invention in the above process indeed does not yield satisfactory results in terms of flavor. While the large amounts of fat in Cheddar give the end-product its pronounced flavor even in small amounts, the flavor of the relatively "fat-poor" semi-hard cheese of the invention is disadvantageously lost in the Mozzarella production process with its traditional "cooking and stretching" step. The cooking conditions according to US 2002/0122845, involving hot water, are believed to be partly responsible for the loss of flavor so often associated with semi-hard cheese of the invention. With the water/whey mixture, e.g. valuable soluble nitrogen and flavor component may be removed.

Also in the field of Cheddar manufacture, US 4,680,181 teaches the mixing of fresh Cheddar curd with milled Mozzarella curd in a ratio of about 60/40. The mixture is then ripened according to Cheddar standards, and results in a cheese product which exhibits unique characteristics not directly attributable to the individual cheeses. However, if considering to adapt the process for the manufacture of a semi-hard cheese with Mozzarella-like textural properties, the essential Mozzarella cooking is again a hurdle difficult to take: The starter cultures would simply not survive the extreme temperature conditions. This way, it is therefore not possible to develop a semi-hard cheese having its desired flavor.

JP 06 087736 describes a ripened hard cheese having a stringiness defined below of at least 40 cm when the ripeness index STN/TN (soluble N/total N x 100) is at least in the range of 15-25%. Stringiness is defined in JP 06 087736 as: the length of the cheese thread (cm) when a 20g sample of cheese is put on a laboratory dish and melted at ca. 90°C for 1 minute, and the cheese is then pulled by a stringiness measuring device at a speed of 10 cm/s. The ripened hard cheese of JP 06 087736 does not show the stringiness characteristics of a pasta filata cheese.

### SUMMARY OF THE INVENTION

It is an objective of the invention to provide a semi-hard cheese having improved textural properties, stringiness and melt characteristics, while maintaining its desirable flavor.

It has been found that this objective may be achieved by combining significant amounts of a ripened semi-hard cheese with a pasta filata cheese, preferably a Mozzarella, using special means to reduce flavor loss during cooking and stretching of the pasta filata, and maintaining the finished cheese for a period of at least 1 week at a temperature of 5 - 9 °C.

In another embodiment, it is found that this objective may also be reached if significant amounts of the aforesaid ripened semi-hard cheese if added to an unbrined, semi-hard cheese curd, preferably of the same type as the added ripened semi-hard cheese, provided that the curd has a pH within the range desired for stretching. Salt and water may optionally be added in the cooking and stretching step.

Independent of the curd source, the pH of the curd should be between 5.1 - 5.4, preferably 5.2 - 5.3, in accordance with Mozzarella standards. At higher values, the cheese mass is too firm; too low, and the cheese is too crumbly.

Here below, the unbrined semi-hard cheese curd and the pasta filata curd of both embodiments are conveniently addressed as "cheese curd".

A number of surprising observations were made, all related with cooking and stretching. Firstly, by using steam during cooking and stretching, a lot of the flavor characteristic for semi-hard cheese is saved. Secondly, the semi-hard cheese develops an attractive creamy flavor (in Dutch "romig") in and after cooking and stretching. Thirdly, it was found that the texture of the cheese after cooking and stretching may be controlled by maintaining the cheese at low-temperature for a period of time sufficient to give the original semi-hard cheese and Mozzarella time to form a network, here below addressed as "texturizing".

The effect of cooking and stretching on flavor control, the development of a creamy flavor and the texturizing step at the end of the Mozzarella production was left unnoticed for the Cheddar combinations reported in the art. It is acknowledged in the art that the effect of proteolysis becomes more noticable upon addition of thermophilic *Lactobacillus* cultures; evidence thereof may be found in Cichosz et al. "The effect of Lactobacillus addition on proteolysis in Gouda cheese during ripening" Milchwissenschaft 61(1) 2006, p49-52, and especially table 2 therein. Additionally, the extent of proteolysis increases with water activity, which is higher for semi-hard cheeses such as Gouda, Edam and Maasdam, than for Cheddar. Moreover, Kilcawley et al. "Influence of composition on the biochemical and sensory characteristics of commercial Cheddar cheese of variable quality and fat content" Int. J. Dairy Technology 60(2) 2007 p81-88, report that a bitter note manifests during prolonged ripening of Cheddar, particularly in case of reduced-fat types.

Although a little proteolysis has been associated with Mozzarella production before, then attributed to chymosin and plasmin (see e.g. Walstra et al. in Dairy Technology page 686), it was believed to promote the melting characteristics of the Mozzarella, and difficult to control. Moreover, it has never been investigated for implementation of a cooking and stretching step in ripened semi-hard cheese manufacture, let alone was it recognized that incorporating semi-hard cheese in the Mozzarella manufacture would have a surprising effect on the ultimate flavor of the combinational cheese, giving it an attractive creamy flavor, in Dutch referred to as "romig".

Although not wishing to be tied down by any theory, the flavor development could be a result of the release of free fat upon milling of the matured cheese and by applying additional shear in the cooker.

### DETAILED DESCRIPTION OF THE INVENTION

The invention thus pertains to a semi-hard cheese having a moisture fat-free content (MFFB) of 57-63% and stringiness characteristics of a pasta filata cheese, wherein said cheese has a total amino acid (AN) content and a soluble nitrogen (SN) content, based on total nitrogen (TN) content, in the range of 1 - 10 % and 4 - 19 %, respectively, after at least 1 week at a temperature of 5 - 9 °C,
wherein the semi-hard cheese is prepared by:
- adding 10 - 60 wt%, based on the total weight of the finished cheese, of ripened semi-hard cheese, optionally after milling, to a cheese curd, provided that the pH of said curd is in the range of 5.1 - 5.4,
- where after the mixture of ripened semi-hard cheese and curd is subjected to cooking and stretching, wherein said cooking involves steam,
- where after said cheese is subjected to 5 - 9 °C for a period of at least 1 week.

The semi-hard cheese is preferably a Gouda-, Edam- or Maasdam-type cheese having stringiness characteristics of a pasta filata cheese. The cheese is preferably a Gouda- or Edam-type, most preferably a Gouda-type.

For sake of overview, here below, the finished cheese produced by blending a ripened semi-hard cheese with the cheese curds and subjecting the mixture to cooking and stretching is referred to as a "cooked and stretched cheese", while the cheese obtained after subsequent texturizing step is interchangeably referred to as "finished semi-hard cheese" and "finished texturized cheese". The term "texturized" in this context point to the homogenization which occurs after cooking and stretching, and which yield the desired cheese with its mild aromatic flavor. This phenomenon is studied in more detail in the accompanying examples.

Traditionally, proteolytic breakdown is monitored by the increase of watersoluble nitrogen (SN) as a percentage of total nitrogen (TN), but the characterization of proteolysis for each particular cheese must consider all the processes that lead to the formation of peptides, free amino acids and products of their catabolism. Therefore, it is also important to monitor the relative amino acid content (AN/TN) of the cheese. This is also addressed by the aforementioned publication by Walstra et al. "Dairy Science and Technology", page 644 therein.

The soluble nitrogen and amino acid nitrogen are determined using the method applied by NIZO, and as laid down in Visser "Contribution of enzymes form rennet, starter bacteria, and milk to proteolysis and flavour development in Gouda cheese. 3. Protein breakdown: analysis of the soluble nitrogen and amino acid nitrogen fractions" Neth. Milk and Dairy J. 31 (1977) 210-239, based on the total amount of nitrogen as determined by macro-Kjeldahl method; AOAC 1990. With respect to other analysis methods at pH 4.6 known in the art, the method as applied by Visser differs in that it uses pH 7.5 and an extraction with CaCl₂ solution for sample preparation. Under these conditions, it is found easier to distinguish between amino acid and soluble nitrogen content. The article also compares these conditions with others frequently encountered in the art. More details are provided in the accompanying examples. The method according to pages 213 and 214 of Visser is hereby incorporated by reference.

Preferably, the value for amino acid (AN) content is lower than that of soluble nitrogen (SN) content. The finished cheese of the invention preferably has an AN content and an SN content, based on total nitrogen (TN) content, in the range of 2 - 10 % and 4 - 17 %, respectively, after at least 1 week at a temperature of 5 - 9 °C, and using the method of Neth. Milk and Dairy J. 31 (1977) 210-239, with pH 7.5 and extraction with CaCl₂ solution for sample preparation. If the curd is a Mozzarella curd, it is preferred that the AN and SN range from 1 - 8 % and 8 - 17 %, respectively, more preferably from 2 - 8 % and 9 - 17 %, respectively. In the embodiment in which the ripened semi-hard cheese is combined with an unbrined semi-hard cheese curd, AN and SN are preferably 2 - 5 and 4 - 19 %, respectively.

For sake of comparison, the soluble nitrogen content is also determined with the above method for a mild (4 months ripening), and a mature (6 - 9 months) Cheddar, including a reduced-fat mature Cheddar, using the above method. Therein, the protein content was estimated to about 25 % and 33 % for the full-fat and reduced-fat cases, respectively (3.9% and 5.2 % TN; found in Walstra et al. "Dairy Science and Technology", Shakeel-Ur-Rehman, Farkeye, Drake Int. J. Dairy Technol. 56 (2003), p 94-98. The results are 19 %, 32 % and 24 % SN/TN for the respective mild, mature and reduced-fat mature Cheddars. A mild fat-reduced 100 % semi-hard cheese (Milner 30+, 4 months of ripening) and a matured fat-reduced 100 % semi-hard cheese (Milner 30+, 8 months) show SN/TN values of 24 and 35 %, respectively. Also in these cases they are all outside the aforementioned range, due to the use of thermophilic cultures combined with ripening at 19 °C.

The finished cheese has stringiness characteristics, and preferably also the melt characteristics of a pasta filata cheese. Meltability refers to the tendency of shredded or diced cheese particles to form a uniform continuous mass upon heating. Stringiness, also called stretchability, is the tendency of the melted cheese, upon pulling, to form fibrous strands that elongate without breaking. Objective methods have been used to evaluate unmelted Mozzarella cheese texture, and determine its texture profile. J. Yun et al. "Mozzarella, cheese: Impact of milling pH on functional properties" J. Dairy Sci. 76 (1993) 3639-3647 gives an overview of all available methods to establish that the finished cheese behaves like pasta filata, in particular Mozzarella, in terms of stringiness, and preferably also in terms of meltability.

Although Mozzarella's stringiness is a well-known concept to the skilled person, guidance for determining the stringiness of Mozzarella is given in the art, see e.g. C. Apostolopoulous "Simple empirical and fundamental methods to determine objectively the stretchability of Mozzarella cheese", J. Dairy Research (1994) 61 405 - 413. Therein, the sensory stringiness scores are found to correlate well with extensibility measurements. In a test a slice of the finished cheese of the invention is positioned on a circular plate (e.g. 165 mm) having a loose centralized circular piece with smaller diameter (e.g. 60 mm) with a vertical rod attached to its centre. The vertical rod also points through the centre of the cheese slice. The complete arrangement was microwave-treated for 15 s, and the rod was stretched vertically with a speed up to 1500 mm/min. The extensibility of the cheese was taken as the distance of travel until all cheese strings failed. Extensibilities of more than 300 mm (mean of five replicates) are desirable. The finished cheese of the invention is no different from the cheeses appreciated as Mozzarella in terms of stretchability or stringiness in the art.

Alternatively, US 6,139,889 teaches a method for the quantification of the stretchability of cheese. The results for stretchability of a Mozzarella reported therein are also applicable in the present case.

Additionally or alternatively, it is preferred to obtain a semi-hard cheese having stringiness characteristics of a pasta filata cheese, by combining 15 up to 55 wt%, most preferably 20 up to 50 wt%, in particular at least 30 wt% of a ripened semi-hard cheese, with a pasta filata cheese and/or unbrined semi-hard cheese, based on the total weight of the finished cheese.

The invention also pertains to a process for preparing a semi-hard cheese having a moisture fat-free content (MFFB) of 57-63%, wherein 10 - 60 wt%, based on the total weight of the finished cheese, of a ripened semi-hard cheese, optionally after grinding or milling, is added to a cheese curd, wherein the pH of said curd is in the range of pH 5.1 - 5.4, more preferably 5.2 - 5.3, where after the mixture of ripened semi-hard cheese and curd is subjected to cooking and stretching, wherein said cooking involves steam, where after said cheese is subjected to a texturizing step, i.e. 5 - 9 °C for a period of at least 1 week, to obtain a semi-hard cheese having stringiness characteristics of a pasta filata cheese. The cheese thus obtained has a coherent and homogeneous structure. This homogenization step may be monitored using stress and strain measurements. As mentioned above, the cheese curd may be a pasta filata curd, e.g. Mozzarella curd, or an unbrined semi-hard cheese curd, preferably a Gouda, Maasdam- or Edam(-type), more preferably a Gouda- or Edam(-type), most preferably a Gouda-type.

Unless stated otherwise, the following may apply to the semi-hard cheese which is mixed in with the cheese curds, and the semi-hard cheese as obtained after texturizing.

The classification of a "semi-hard cheese" is based on its moisture fat-free content (MFFB), which according to Codex General Standards for Cheese (Codex Stan A-6 1978m Rev, 1-1999) ranges from 54 - 63 %. The MFFB value equals 100% * weight of moisture in the cheese / (total weight of cheese - weight of fat in cheese). In the context of the invention, the semi-hard cheese exhibits an MFFB of at least 57 %, more preferably at least 58 %, most preferably at least 59 %. Its moisture content is preferably at least 40 wt%.

It thus distinguishes from a hard Cheddar cheese, having a MFFB in the range of 49 - 56 wt%, and at most 39 wt% moisture. For sake of completeness, a Mozzarella has an MFFB of typically 66 % (see F.V. Kosikowski et al. "Cheese and fermented milk foods" Vol 1, p. 177).

The semi-hard cheese of the invention - before mixing with the curds - has been subjected to bacterial ripening for at least 6 weeks, more preferably at least 8 weeks, most preferably at least 16 weeks. These bacterial-ripened cheeses unmistakably distinguish from fresh or processed cheeses, which are made by grinding, heating and mixing natural cheese, wherein a natural cheese is defined as one that requires no further processing after being produced. Simplified, fresh or processed cheese manufacture does not involve (extended) fermentation after shaping. Bacterial-ripening cheese of the invention is also different from mould ripened cheeses such as Camembert, Brie, Roquefort etc..

Alternatively or additionally, the semi-hard cheese is obtained by its characteristic curd washing step. The invention is particularly directed to a semi-hard cheese of the Gouda-, Edam- or Maasdam-type, where proteolysis-driven flavouring is vital. Their manufacture involves mixing (skimmed) milk with a starter containing mesophilic bacteria, coagulation to obtain a curd/whey mixture, cutting of the curd, drainage, scalding, curd washing, moulding and pressing, brining and the afore-defined ripening. The mesophilic starter cultures give this cheese its traditional "eyes". Ripening typically involves temperatures between 12 - 14 °C for at least a predominant part of the ripening period. The "semi-hard cheese" is preferably of the Gouda- or Edam-type, due to its constant and flexible texture.

Terms such as "Edam", "Gouda" and "Milner" are directly and unambiguously clear to the skilled person in the field, supported by common general knowledge from e.g. Walstra et al. in chapter 2 of "Cheese: Chemistry, Physics and Microbiology, Volume 2, Major cheese Groups, ed. P.F. Fox, Chapman & Hall, ISBN 0 412 53510 6 (V.2)". Alternatively, numerous state-regulated cheese standards, such as the US - 21 C.F.R. 133 describe and define the ingredients and manufacturing processes marking these varieties. The semi-hard cheese that is mixed with the curds may be a Gouda, Edam or Maasdam, or a "Gouda-, Edam- or Maasdam-type". Gouda and Edam are well-described in Codex Stan C-5-1966 and C-4-1966, respectively. The finished cheese with amended textural properties is referred to as a "Gouda-, Edam- or Maasdam-type". It is also possible to combine a ripened cheese with a cheese curd of different fat contents, to ultimately produce a finished cheese with a lower fat content. For instance, a full-fat ripened Gouda may be combined with a low-fat curd, e.g. Mozzarella curd, to obtain a low-fat cheese, e.g. 30+ Gouda.

Effects are especially pronounced in those embodiments in which the aforementioned semi-hard cheese varieties is prepared from an original semi-hard cheese which is made with an additional starter containing thermophilic bacteria, which improves the flavor of the cheese and gives it its sweet flavor. Maasdam and Gouda, in particular Milner, are good examples thereof. The additional thermophilic starter cultures are accompanied from increased scalding and ripening temperatures, typically in the range of 29 - 35 °C and 17 - 19 °C, respectively, for the remainder of the ripening period after 4 weeks. The high-temperature ripening is referred to in Dutch as "stoken". The sweetness of the finished cheese is characterized by increased amounts of pyrazines, 2,3,5-trimethyl-6-ethylpyrazine being a good indicator thereof; amounts of 2,3,5-trimethyl-6-ethylpyrazine in the finished cheese are preferably higher than 10 µg/kg, more preferably higher than 20 µg/kg, most preferably higher than 30 µg/kg of the dry weight of the final cheese, as determined by dynamic headspace in combination with MS full scan. The link between thermophilic starter bacteria, sweet flavor and increased pyrazine contents is laid down in more detail in EP-A-1.576.885.

Obviously, if a particular type of semi-hard cheese is mixed in with the curds, it is intended that the end product is still appreciated as such a type of semi-hard cheese. Exemplifying, use of a Gouda-type of cheese for mixing with the curds according to the invention inherently results in a Gouda-type end-product.

The fat content of the finished cheese is preferably between 10 - 52 wt%, more preferably 20 - 38 wt%, based on dry matter. The invention thus encompasses low or reduced-fat cheeses, commercialized as 0+, 5+, 10+, 15+, 20+ cheeses. In terms of its dry solids content, such a reduced-fat cheese preferably contains 0 - 30 wt% fat, more preferably at least 10 wt% fat. However, in a preferred embodiment, the invention pertains to 30+ cheese, having a fat content of about 30 - 38 wt%, more preferably up to 34 wt%, based on its dry matter.

The term "pasta filata" as used throughout the description and accompanying claims includes cheeses that are characterized by a soft but stringy texture and that have good melt characteristics. Such substantially unripened cheeses are well known by the names of Mozzarella and Provolone. In terms of MFFB and moisture content, such cheese typically exhibits values in the range of 66 - 68 wt% and 55 wt%, respectively. It is characterized as a semi-soft/semi-hard unripened cheese.

In the following, the "pasta filata" and "Mozzarella" are regarded synonymous.

The curds may be prepared from whole milk, in which case the finished cheese would have a minimum of 45 wt% fat on a dry basis. Alternatively, the milk may be partially skimmed, in which case the finished cheese would have 30 - 45 wt% fat on a dry basis. The amount may be adjusted to the desired fat content of the finished cheese.

In case the semi-hard ripened cheese is mixed with a Mozzarerlla curd, the curd is prepared by adding traditional Mozzarella starter culture and rennet to the pasteurized milk. The starter may be made up of *Streptococcus thermophilus, Lactobacillus delbrueckii,* or *Lactobacillus helveticus.* The starter may be a blend of the foregoing, or used individually. One source of the starter bacteria is Chr. Hansen, Inc. That company is also a source of rennet. The rennet causes the milk to coagulate. It typically involves 30 - 60 minutes of ripening, at optimum ripening temperatures of about 32 °C. The coagulum is cut or diced into curds. Whey is drained there from. The pH of the curd is in the range of 5.1 - 5.4, preferably 5.2 - 5.3.

In another embodiment, the curds are of an unbrined semi-hard cheese, preferably of the same type as the ripened semi-hard cheese it is mixed with. Details are given elsewhere, and otherwise known to the skilled person. However, in order to make such an unbrined semi-hard cheese curd suitable for the cooking and stretching step, its pH is to be adjusted in the range of 5.1 - 5.4, more preferably 5.2 - 5.3, for the afore-stated reasons. The curds may be fresh or for shelf-life reasons be foil-packed.

The ripened semi-hard cheese is then mixed in the aforementioned amounts with the curds. Thereto, the ripened cheese may optionally be downsized to 0.1 - 5 mm by regular grinding, milling, shredding, fining, from now on referred to as "milling". However, this additional step was found unnecessary, and thus optional, since good results were also obtained by incorporating unmilled semi-hard cheese. The cooking and stretching conditions, in particular the temperatures applied therein, were found sufficient to establish mixing of the curds with the ripened semi-hard cheese.

The mixing and optional milling steps may be preceded by a decoating step, typically involving shaving and/or scraping. However, advantageously, use is made of a semi-hard cheese that has been (partly) foil-ripened or has been ripened in a casing. This way, the ripened semi-hard cheese is ready-for-use in subsequent cooking and stretching without any tedious coating removal steps, thus economically avoiding the loss of valuable cheese material. At most, a casing-ripened cheese has to be stripped from its casing. However, this is a simple processing step that can be automated and does not result in waste of material. Casing in the context of the invention will be discussed further below.

Foil-ripening includes "combi-ripening", as described in registered NL patent 1027710. In summary, the ripening period involves a part in which the cheese is ripened naturally, and a subsequent part in which the cheese is foil-ripened. As a result, a ripened cheese is provided with little or no coating. It is preferred that the foil-ripening period is predominant.

The characterizing part of the Mozzarella manufacture is the following cooking and stretching step, in which the curd is kneaded and stretched to the desired pliable consistency, and which gives the finished cheese its characteristic stringy texture. It is found that the taste and flavor profile of the mixed-in ripened semi-hard cheese is better maintained if the hot water in traditional cooking is replaced by steam. The steam-based cooking step described in WO-A-2006/026811 is found to be suitable in the present process. Hence, in a preferred embodiment, the curds, including the semi-hard cheese, is heated continuously using direct steam injection while being mechanically worked, until the curd with additional ingredients like herbs, fruits, walnuts and cumin is cooked and formed into a flowable fibrous mass.

The steam temperature is preferably maintained between 130 - 200 °C, more preferably between 150 - 180 °C in this step. The steam is injected under a pressure of between 200 - 1200 kPa, and more preferably at a pressure of 300 - 900 kPa. The product pressure may be maintained at 0 - 400 kPa. The cook temperature of the cheese curd is preferably between 55 and 85 °C. Mechanical work typically involves rotational agitation, preferably at a rotation speed of 10 - 1500 rpm. The time that the cheese curd is subjected to cooking varies, depending on the pump speed supplying the curds to the cooker and the temperature of the steam injected into the cheese curd, the agitation speed and the time needed for complete cooking, and is adjusted accordingly, such as by varying the agitator rotational speed. Such time within the chamber may range from between 5 seconds to 15 minutes.

However, modifications will readily occur to the skilled person, without departing from the invention.

Between cooking and stretching, and texturizing, the process of the invention may comprise the "conventional Mozzarella manufacture steps" of forming, brining and drying. For brining, salt may be added at various stages in the process, during and/or after cooking and stretching, including directly into the curd in the manufacturing stage before cooking and stretching. Whether or not a drying step is to be included, depends on the moisture content of the cheese obtained and that desired. Alternatively, it may be desirable to add additional water into the curds.

Forming may involve traditional "pressing and moulding". Advantageously, instead of pressing, moulding and drying, the curd blended with the ripened semi-hard after cooking and stretching may be extruded into casings, rather than in the conventional molds. It is found that casings bring various advantages over firm blocks of cheese in terms of handling and storage. Hence, in a preferred embodiment, forming encompasses filling the cooked and stretched cheese into a casing.

The process of manufacturing semi-hard cheese in casing is disclosed in copending European application 06120981.3. The "moulding and pressing" of cooked and stretched grains is substituted for filling of the cooked and stretched curds into a casing. The cheese is shaped during filling, and the curd grains fuse during or after filling. However, when choosing to package the cooked and stretched semi-hard cheese in a casing, a flexible casing which is impermeable to gas and water should be applied.

The casing preferably has a water permeability of lower than 100 g/m² per day, more preferably lower than 50 g/m² per day, as measured in accordance with ASTM at 38 °C and 90% RH. Moreover, the casing should be sufficiently thick to make it suitable for packaging and further processing. If decorative eyes are desired, the casing should be selected such that it is sufficiently flexible to withstand the gas production induced by butyric acid bacteria spores.

Casings as commonly applied for past-type foodstuffs such as sausage and melt cheeses are well suitable for the purpose of the invention. Traditionally casings were associated with cleaned and salted animal intestines. These natural casings are nowadays often replaced by synthetic counterparts, e.g. cellulose derivatives. Both natural and synthetic casings may be applied, and a synthetic casing preferably contains collagen and/or cellulose as a base material. It is typically a tubular film which is produced by shaping the casing and subjected it to biaxial stretching according to processes that are known per se. Examples thereof are given in US 4,303,711 and WO-A-98/06271, but the invention is not limited thereto. The casing may be provided internally with a releasing agent to increase peelability, or other means to promote detachment.

Note that the traditional eyes of a semi-hard cheese such as Gouda(-type) or Edam(-type), let alone the Swiss-type character of a Maasdam (-type), would be lost during cooking and stretching. However, it is found that a finished cheese according to the invention can attractively be provided with eye formation (again), by deliberately adding butyric acid culture to the curd.

Traditionally, eye formation in cheese is associated with the use of propionic acid cultures. However, these temperature-sensitive cultures would not survive the hot whey treatment and cooking conditions which cannot be by-passed in Mozzarella preparation.

While butyric acid bacteria spores are on the other hand known to survive high temperatures and provide three times the amounts of gas than propionic acid cultures, they are carefully avoided, since they associate with taste and flavor deficits as well as slit and crack formation. It is important to realize that normal semi-hard cheese manufacture involves extended ripening at conditions where growth control is impossible. The consequence, in the art referred to as "gas blowing" or "late blowing", is often avoided by adding sodium or potassium nitrate to the curd, and/or bactofugation of the cheese milk. Therefore, conventional semi-hard cheeses do not comprise butyric acid cultures in detectable levels.

Hence, the addition of butyric acid cultures to provide an "eyed" semi-hard cheese according to the invention is a surprising contribution over the prior art. It is found that the aforementioned disadvantages associated with butyric acid bacteria are outweighed because of the special cheese manufacture, which lacks the traditional ripening step at high temperature, e.g. 13 °C. During texturizing, and subsequent storage, the cheese, preferably in a casing, is maintained at a temperature of typically 7 °C, at which no growth is reported.

Hence, the invention also encompasses the addition of butyric acid cultures to the mixture of curds and ripened semi-hard cheese, such as Clostridium tyrobutyricum bacteria spores, to give the finished cheese controllable decorative eyes, if desired from a consumer's point of view. The growth is controlled by maintaining the temperature of the cooked and stretched cheese, preferably after forming, to a temperature of 18 - 20 °C, and for a period of 1 - 6 days, preferably 2 - 4 days, depending on the desired appearance. When to perform the short high-temperature step will be discussed further below. Optimal results were obtained for 2 - 200 bacteria spores per gram of the final semi-hard cheese.It is considered with the merits of the skilled person's knowledge to recognize the difference between the gas-induced eyes and mechanical hole or slit formation.

It is thus possible to obtain a finished semi-hard cheese of the invention containing decorative eyes, even Swiss-type cheese holes. These eyes are substantially round, or "spherical and shiny holes of some 5 to 10 mm in diameter" (from Walstra et al. "Dairy Science and Technology", page 709-710 therein).

If desired, the finished cheese may be provided with the color of its conventional semi-hard counterpart, by adding a colorant such as annatto, preferably to the cheese milk. The skilled person will be able to determine the amounts thereof.

As addressed above, after forming of the cheese, it is to be subjected to an additional texturizing step. Thereto, the cooked and stretched cheese of the invention is maintained at 5 - 9 °C, more preferably 6 - 8 °C for a period of at least 1 week, more preferably 1 - 4 weeks, even more preferably at least 2 weeks, especially at least 3 weeks, and preferably under normal storage conditions.

In view of the above, the "low-temperature" texturizing period does not need to be continuous; it may be interrupted by a short ripening period at higher temperatures, e.g. to provide the finished cheese with decorative eyes, provided that the cheese is still subjected to a total of at least 7 days at the aforementioned texturizing conditions. However, in a preferred embodiment, optional "eye formation" is performed before texturizing.

After texturizing, the texturized cheese may be applied as an ingredient in a food product. The semi-hard cheese thus prepared is also suitable for use in meat substitute products, preferably as a filling, for instance in the milk protein-derived meat substitute products reported in EP-A-1.467.628.

The invention is discussed in more detail here below for two preferred embodiments.

In one preferred embodiment, the semi-hard cheese, preferably a 30+, is mixed in an amount of 40 - 75 %, more preferably 45 - 60 wt%, as calculated on the basis of the total weight of the finished cheese.

In terms of its total amino acid (AN) and soluble nitrogen (SN) content, based on total nitrogen (TN) content, the finished semi-hard cheese preferably has a value in the range of 5 - 10 % and 12 - 17 %, respectively. The MFFB is typically between 58 - 62 %; a moisture content between 48 - 52 % is preferred.

In addition to the foregoing features, the cheese obtained there from may be further characterized by its texture. It was found that the texture of the cheese differs from its individual counterparts, especially in terms of stress-to-rupture. This is yet another indication of the effect of proteolysis on the end-product: The more proteins are degraded, the more the stress-to-rupture reduces.

With a texture-analyzer it is determined that the stress-to-rupture during the texturizing step reduces to lower than 230 kPa. For sake of comparison, a Mozzarella is characterized by a stress-to-rupture of 260 kPa, and semi-hard cheese has far higher numbers, typically more than 500 kPa. Additionally or alternatively, the texturized semi-hard cheese may be characterized by a deformation strain of at least 0.7 on a scale of 0 to 1, while Mozzarella and 30+ cheese exhibit values of 0.5 or less.

The above results are reproducible using a Stable Microsystems TA-XT2i Texture Analyzer (Stable Micro Systems, Surrey, UK) with the following settings:
- "measure force in compression";
- automatic trigger at 5 g force;
- body geometry: 13 mm diameter 26 mm high, cylinder-shaped;
- penetration distance 20 mm;
- pre-speed, test-speed and post-speed 1.0, 0.5 and 2.0 mm/s, respectively; and
- sample temperature 7 °C.

Although the inventors do not wish to be tied down to any theory, it is their belief that the reason for the observed differences between the semi-hard cheese and the individual, unmixed cheese counterparts are due to the finished cheese still being a combination of two separate networks. As an end result, the finished cheese is not as strong as the ingredients it is made of.

The thus-formed cheese has excellent melting behavior, especially if melted at high temperature of about 150 - 200 °C, thus making it suitable as a filling in meat substitute products, such as the milk protein-derived meat substitute products reported in EP-A-1.467.628, typically a Cordon Bleu-like or filet-like meat substitute product. The fibrous structure resulting from the Mozzarella manufacture contributes in a positive manner.

It is preferred to use the cheese of the invention in cased form, since it possible to obtain substantially circular cheese slices there from without any additional processing steps or loss of valuable cheese material. The circular forms make a perfect fit with the similarly shaped meat substitute products commercially available.

In another embodiment the ripened semi-hard cheese, preferably a 30+, is added to the curds in an amount of 20 - 40 %, more preferably 25 - 38 wt%, most preferably 26 - 35 wt%, as calculated on the basis of the total weight of the finished cheese.

The total amino acid (AN) and soluble nitrogen (SN) content, based on total nitrogen (TN) content, of the finished semi-hard cheese are preferably in the range of 2 - 5 % and 4 - 12 %, respectively. The MFFB is typically between 58 - 62 %; a moisture content between 48 - 52 % is preferred.

The cheese preferably has a stress-to-rupture and deformation strain in the range of 300 - 500 kPa and at least 0.5, respectively and independently, using the aforementioned Texture-analyzer conditions. These values may well relate to the fact that the finished semi-hard cheese is still largely governed by -the network provided for by the curds.

Such a product is found suitable for the consumers' market, combining the strong 30+ cheese taste with typical Mozzarella characteristics. However, the cheese according to this embodiment is not limited thereto; other uses are in industrial processing, meat replacement, for toasties etc. etc..

### EXAMPLES

### Example 1 - Preparation of Milner "gerijpt"-Mozzarella 24% and 50%

Milner cheese was ripened for 16-18 weeks (partly at 13°C and partly at 19°C). After ripening, the cheese was scraped and milled to pieces of about 2 mm on average. The milled Milner was stored chilled till use.

Mozzarella curd was made from skimmed milk that is standardized and pasteurized to create curd with the right amount of fat (30% fat on dry matter). Annatto (E160b) was added to the milk to give the product a yellowish color. The milk was heated till about 32 °C and soured with starter cultures (*Streptococcus thermophillus, Lactobacillus delbrueckii ssp. bulgaricus* and *Lactobacillus helveticus*) and Gluco Delta Lacton. Rennet on microbiological base was added to let the milk rennet and afterwards the curd was cut into pieces. Part of the whey was drained. Afterwards the curd was transported over a track to drain out, to obtain a dry curd. The curd was salted and had a pH of 5.2 to 5.3.

In one embodiment, 76 kg of the mozzarella curd and 24 kg of the milled Milner were transferred to the so called 'stretcher' or 'cooker', as detailed in the description.

In another embodiment, both Mozzarella curds and milled Milner were mixed in equal amounts (50 kg each). In that case, water was added to reach the desired moisture content of about 50 % in the end product.

Cooking and stretching involved steam, cheese curd temperature of 60 - 80 °C and a processing time of about 10 minutes.

After stretching, the hot products were directly filled into a flexible, plastic, cylindrical casing. The water- and gas-impermeable casings were closed, and prevented the end products from drying. Their moisture content was thus maintained.

The end products were cooled down to a temperature at 6 °C for a period of more than 1 week.

In either case, a fat content of 19% on total matter was obtained. The moisture amount of the end products was 50%. They contained 30% protein and about 1.8% salt. After the cooling period, the amino acid content and soluble nitrogen content were determined according to the following recipes:

### Total nitrogen TN

Kjeldahl.

### Soluble nitrogen content SN

- 16 g cheese was mixed with 0.55 % CaCl₂ solution in water at 40 °C, to 150 ml;
- the mixture was suspended using UltraTurrax for 5 minutes;
- CaCl₂ was added to 190 g, and pH adjusted to 8.4 using 4 M NaOH solution;
- CaCl₂ was added to 210 g; and pH adjusted to 7.5 using 4 M NaOH solution;
- suspension was centrifuged at 4 °C at 10,000 rpm for 20 minutes; and
- the contents was then filtered over S&S 520 b ½.

Kjeldahl was performed on 25 ml of the sample.

### Amino acid - Nitrogen content AN

- 15 ml 4.6 M sulfuric acid and 6 ml 50 % PTA were added to 15 ml of the above sample, respectively;
- the mixture was left overnight at room temperature;
- water was added to 50 ml volume; and
- the mixture was filtered over Whatman 40.

Kjeldahl was performed on 25 ml of the sample.

The results for the Milner gerijpt-Mozzarella cheeses of the invention and its unmixed counterparts (Milner gerijpt and Mozzarella 48+) are shown in table 1.

Also listed in table 1 are the results of texture analysis, in terms of stress-to-rupture σ and deformation strain ε, using the recipe as given in the description.

**Table 1 - Various properties of Milner gerijpt-Mozzarella according to invention**

| | SN/TN (%) | AN/TN (%) | σ (kPa) | ε |
|---|---|---|---|---|
| Mozzarella 48+ | 4.24 | 0.98 | 260 | 0.5 |
| Milner gerijpt | 24.43 | 10.65 | 700 | 0.4 |
| **Milner-Mozzarella 24%** | **10.29** | **2.80** | **380** | **0.55** |
| **Milner-Mozzarella 50%** | **15.49** | **6.41** | **200** | **0.8** |

From the table it is clear that the 50%-combination was a relatively weak cheese with initial inhomogeneities, most probably due to the development of two substantially independent networks with little entanglements. The 24%-combination exhibited a continuous Mozzarella structure. There, the Milner was found to stabilize and fortify the structure, thus increasing the stress-to-rupture.

### Example 2- Preparation of Milner gerijpt-Mozzarella 24% and 50% II

The above recipe was repeated using Milner cheese which was foil-ripened for 30 weeks at 13 °C.

Mozzarella curd was produced in the same way as described in Example 1. However, the ripened Milner cheese was now added to the stretching without any preceding milling or scraping steps.

The characteristics of the end products corresponded to those summarized in example 1.

### Example 3 - Swiss-type cheese

The recipe given in example 1 was repeated using a Maasdam traditionally ripened. The ripened Maasdam was mixed with the Mozzarella in approximately equal amounts. Before stretching, 20 butyric acid bacteria spores were mixed in.

After stretching and filling, the semi-hard cheese was first ripened for 4 days at 19 °C, and then subjected to 7 °C for more than 1 week. The short ripening period gave the end product its characteristic Swiss-type eyes.

## Claims

1. A semi-hard cheese having a moisture fat-free content (MFFB) of 57 - 63 % and stringiness characteristics of a pasta filata cheese, wherein said cheese has a total amino acid (AN) content and a soluble nitrogen (SN) content, based on total nitrogen (TN) content, in the range of 1 - 10 % and 4 - 19 %, respectively, after at least 1 week at a temperature of 5 - 9 °C,
wherein the semi-hard cheese is prepared by:
- adding 10 - 60 wt%, based on the total weight of the finished cheese, of ripened semi-hard cheese, optionally after milling, to a cheese curd, provided that the pH of said curd is in the range of 5.1 - 5.4,
- where after the mixture of ripened semi-hard cheese and curd is subjected to cooking and stretching, wherein said cooking involves steam,
- where after said cheese is subjected to 5 - 9 °C for a period of at least 1 week.

2. The semi-hard cheese according to claim 1, having a moisture content of at least 40%.

3. The semi-hard cheese according to claim 1 or 2, being a Gouda-, Edam- or Maasdam-type.

4. The semi-hard cheese according to any one of the preceding claims, containing decorative eyes.

5. A process for preparing a semi-hard cheese having a moisture fat-free content (MFFB) of 57 - 63 %, wherein 10 - 60 wt%, based on the total weight of the finished cheese, of ripened semi-hard cheese, optionally after milling, is added to a cheese curd, provided that the pH of said curd is in the range of 5.1 - 5.4, where after the mixture of ripened semi-hard cheese and curd is subjected to cooking and stretching,
wherein said cooking involves steam,
where after said cheese is subjected to 5 - 9 °C for a period of at least 1 week,
to obtain a semi-hard cheese having stringiness characteristics of a pasta filata cheese.

6. The process according to claim 5, wherein said cheese curd is the curd of a pasta filata cheese or of an unbrined semi-hard cheese.

7. The process according to claim 5 or 6, wherein 2 - 200 gram butyric acid bacteria spores per gram of the finished cheese is mixed with the pasta filata curd before or during cooking, and wherein the cheese after cooking and stretching is subjected to a temperature of 18 - 20 °C for a period of 1 - 6 days, to obtain a semi-hard cheese having decorative eyes.

8. The process according to any one of claims 5-7, wherein said semi-hard cheese is of the Gouda-, Edam- or Maasdam-type.

9. The process according to any one of claims 5-8, wherein the cooked and stretched cheese is filled in a casing.

10. The process according to any one of claim 5-9, wherein at least 30 wt% of said ripened semi-hard cheese is mixed with said curd.

11. Use of the semi-hard cheese according to any one of claims 1-4, or as prepared according to the process according to any one of claims 5-10 in meat substitute products.

## Patentansprüche

1. Halbharter Käse mit einem Fettfrei-Feuchtigkeitsgehalt (MFFB) von 57 - 63 % und Fadenzieheigenschaften eines Pasta-Filata-Käses, wobei der Käse einen Gesamtaminosäure(AN)-Gehalt und einen löslichen Stickstoff (SN)-Gehalt, basierend auf Gesamtstickstoff (TN)-Gehalt, im Bereich von 1 - 10 % und 4 - 19 %, respektive, aufweist, nach mindestens 1 Woche bei einer Temperatur von 5 - 9 °C,
wobei der halbharte Käse hergestellt wird durch:
- Zugeben von 10 - 60 Gew.-%, basierend auf dem Gesamtgewicht des fertigen Käses, eines gereiften halbharten Käses, wahlweise nach Vermahlen, zu einem Käsebruch, mit der Maßgabe, dass der pH des Bruchs im Bereich von 5,1 - 5,4 liegt,
- wonach die Mischung aus gereiftem, halbhartem Käse und Bruch einem Kochen und Dehnen unterzogen wird, wobei das Kochen Dampf involviert,
- wonach der Käse 5 - 9 °C über einen Zeitraum von mindestens 1 Woche ausgesetzt wird.

2. Halbharter Käse nach Anspruch 1, mit einem Feuchtigkeitsgehalt von mindestens 40 %.

3. Halbharter Käse nach Anspruch 1 oder 2, welcher ein Gauda-, Edam- oder Maasdam-Typ ist.

4. Halbharter Käse nach mindestens einem der vorangehenden Ansprüche, enthaltend dekorative Augen.

5. Verfahren zur Herstellung eines halbharten Käses mit einem Fettfrei-Feuchtigkeitsgehalt (MFFB) von 57 - 63 %, wobei 10 - 60 Gew.-%, basierend auf dem Gesamtgewicht des fertigen Käses, gereifter, halbharter Käse, wahlweise nach Vermahlung, zu einem Käsebruch gegeben wird, mit der Maßgabe, dass der pH des Bruchs im Bereich von 5,1 - 5,4 liegt, wonach die Mischung aus gereiftem, halbhartem Käse und Bruch einem Kochen und Dehnen unterzogen wird, wobei das Kochen Dampf involviert, wonach der Käse 5 - 9 °C über einen Zeitraum von mindestens 1 Woche unterzogen wird, um einen halbharten Käse mit Fadenzieheigenschaften eines Pasta-Filata-Käses zu erhalten.

6. Verfahren nach Anspruch 5, wobei der Käsebruch der Bruch eines Pasta-Filata-Käses oder eines nicht mit Salzlake behandeltem, halbharten Käses ist.

7. Verfahren nach Anspruch 5 oder 6, wobei 2 - 200 Gramm Buttersäure-Bakteriensporen pro Gramm des fertigen Käses mit dem Pasta-Filata-Bruch vor oder während dem Kochen gemischt werden, und wobei der Käse nach dem Kochen und Dehnen einer Temperatur von 18 - 20 °C während eines Zeitraums von 1 - 6 Tagen unterzogen wird, um einen halbharten Käse mit dekorativen Augen zu erhalten.

8. Verfahren nach mindestens einem der Ansprüche 5 - 7, wobei der halbharte Käse vom Gauda-, Edam- oder Maasdam-Typ ist.

9. Verfahren nach mindestens einem der Ansprüche 5 - 8, wobei der gekochte und gedehnte Käse in ein Behältnis eingefüllt wird.

10. Verfahren nach mindestens einem der Ansprüche 5 - 9, wobei mindestens 30 Gew.-% des gereiften, halbharten Käses mit dem Bruch gemischt werden.

11. Verwendung des halbharten Käses nach mindestens einem der Ansprüche 1 - 4 oder wie hergestellt gemäß dem Verfahren nach mindestens einem der Ansprüche 5 - 10, in Fleischersatzprodukten.

## Revendications

1. Fromage à pâte mi-dure présentant une teneur en humidité dégraissée (MFFB) comprise entre 57 et 63 % et des caractères filandreux d'un fromage à pâte filée, dans lequel ledit fromage présente une teneur totale en acide aminés (AN) et une teneur en azote soluble (SN), par rapport à une teneur en azote totale (TN), comprise entre 1 et 10 % et entre 4 et 19 %, respectivement, après au moins 1 semaine à une température comprise entre 5 et 9°C,
dans lequel le fromage à pâte mi-dure est préparé en :
- ajoutant entre 10 et 60 % en poids, par rapport au poids total du fromage fini, de fromage à pâte mi-dure affiné, éventuellement après l'avoir moulu, à un caillé de fromage, en veillant à ce que le pH dudit caillé soit compris entre 5,1 et 5,4,
- le mélange de fromage à pâte mi-dure affiné et de caillé étant ensuite cuit et étiré, ladite cuisson faisant intervenir de la vapeur,
- ledit fromage étant ensuite soumis à une température comprise entre 5 et 9°C pendant une période d'au moins 1 semaine.

2. Fromage à pâte mi-dure selon la revendication 1, présentant une teneur en humidité d'au moins 40 %.

3. Fromage à pâte mi-dure selon la revendication 1 ou 2, de type Gouda, Edam ou Maasdam.

4. Fromage à pâte mi-dure selon l'une quelconque des revendications précédentes, contenant des trous décoratifs.

5. Procédé de préparation d'un fromage à pâte mi-dure présentant une teneur en humidité dégraissée (MFFB) comprise entre 57 et 63 %, dans lequel on ajoute entre 10 et 60 % en poids, par rapport au poids total du fromage fini, de fromage à pâte mi-dure affiné, éventuellement après l'avoir moulu, à un caillé de fromage, en veillant à ce que le pH dudit caillé soit compris entre 5,1 et 5,4, le mélange de fromage à pâte mi-dure affiné et de caillé étant ensuite cuit et étiré, dans lequel ladite cuisson fait intervenir de la vapeur, ledit fromage étant ensuite soumis à une température comprise entre 5 et 9°C pendant une période d'au moins 1 semaine, pour obtenir un fromage à pâte mi-dure présentant les caractères filandreux d'un fromage à pâte filée.

6. Procédé selon la revendication 5, dans lequel ledit caillé de fromage est le caillé d'un fromage à pâte filée ou d'un fromage à pâte mi-dure non saumuré.

7. Procédé selon la revendication 5 ou 6, dans lequel on mélange entre 2 et 200 grammes de spores de bactéries productrices d'acide butyrique par gramme du fromage fini au caillé à pâte filée avant ou au cours de la cuisson, et dans lequel on soumet le fromage après cuisson et étirement à une température comprise entre 18 et 20°C pendant une période de 1 à 6 jours, pour obtenir un fromage à pâte mi-dure présentant des trous décoratifs.

8. Procédé selon l'une quelconque des revendications 5 à 7, dans lequel ledit fromage à pâte mi-dure est de type Gouda, Edam ou Maasdam.

9. Procédé selon l'une quelconque des revendications 5 à 8, dans lequel le fromage cuit et étiré vient remplir un boîtier.

10. Procédé selon l'une quelconque des revendications 5 à 9, dans lequel au moins 30 % en poids dudit fromage à pâte mi-dure affiné est mélangé audit caillé.

11. Utilisation d'un fromage à pâte mi-dure selon l'une quelconque des revendications 1 à 4 ou tel que préparé selon l'une quelconque des revendications 5 à 10 dans des produits de substitution à la viande.
